# EUROPEAN PATENT APPLICATION

(11) **EP 3 594 981 A1**
(43) Date of publication of application: **15.01.2020**
(21) Application number: 18183179.3
(22) Date of filing: 12.07.2018
(51) Int. Cl.: H01H 31/00, H01H 39/00, H02G 15/00

(54) **AN EARTHING SWITCH**

(71) Applicant: ABB Schweiz AG, 5400 Baden (CH)
(72) Inventor: Gentsch, Dietmar, 40882 Ratingen (DE); Sarfraz, Mohammad Bilal, 47445 Moers (DE); van-de-Zand, Andreas, 47495 Rheinberg (DE)
(74) Representative: Schmidt, Karl Michael

(57) **Abstract**

The present invention relates to an earthing switch (10). The earthing switch has a housing (20), a connector (30), a movable contact (45) and an earth terminal (40). The housing is configured to form an insulating shell of the earthing switch. The connector is configured to connect to a Medium Voltage MV cable. The connector is configured to enable an electrical connection (50) to a core of the MV cable to extend at least partially through the connector. The connector is configured to enable an outer layer of the MV cable to extend at least partially over the connector. The earth terminal extends through the housing, and a part of the earth terminal that is external to the insulating shell is configured to electrically connect to Earth potential. When the MV cable is connected to the earthing switch, the earthing switch is configured such that in a first mode of operation the electrical connection to the core of the MV cable that extends at least partially through the connector is not connected to a part of the earth terminal internal to the insulating shell to insulate the core of the MV cable from Earth potential. In a second mode of operation the electrical connection to the core of the MV cable that extends at least partially through the connector is connected to the part of the earth terminal internal to the insulating shell to electrically connect the core of the MV cable to Earth potential. The position of the movable contact inside the earthing switch defines the present mode of operation.

## Description

### FIELD OF THE INVENTION

The present invention relates to an earthing switch and to a method for providing an earthing switch.

### BACKGROUND OF THE INVENTION

Medium voltage (MV) switching gear uses earthing switches having flat terminals, so that the earthing switch can be connected to an earthed bar on one side and to a bus bar or tie at the other side. This arrangement of earthing switch is not always convenient.

### SUMMARY OF THE INVENTION

Therefore, it would be advantageous to have an improved technology for providing an earthing switch.The object of the present invention is solved with the subject matter of the independent claims, wherein further embodiments are incorporated in the dependent claims. It should be noted that the following described aspects of the invention apply also for the earthing switch and for the method of providing an earthing switch.

In a first aspect, there is provided an earthing switch, comprising:
- a housing;
- a connector;
- a movable contact; and
- an earth terminal.

The housing is configured to form an insulating shell of the earthing switch. The connector is configured to connect to a Medium Voltage MV cable. The connector is configured to enable an electrical connection to a core of the MV cable to extend at least partially through the connector. The connector is configured to enable an outer layer of the MV cable to extend at least partially over the connector. The earth terminal extends through the housing. A part of the earth terminal that is external to the insulating shell is configured to electrically connect to Earth potential. When the MV cable is connected to the earthing switch, the earthing switch is configured such that in a first mode of operation the electrical connection to the core of the MV cable that extends at least partially through the connector is not connected to a part of the earth terminal internal to the insulating shell to insulate the core of the MV cable from Earth potential. In a second mode of operation the electrical connection to the core of the MV cable that extends at least partially through the connector is connected to the part of the earth terminal internal to the insulating shell to electrically connect the core of the MV cable to Earth potential. The position of a movable contact inside the earthing switch defines the present mode of operation.

In this way, an earthing switch is provided that can be added to existing switchgear to increase overall safety of the switch gear that provides an additional earthing switch or fast earthing switch. Existing MV switchgear use earthing switches having flat terminals that can be connected to an earthed bar on one side and to a bus bar or tie on the other side, however it can be difficult to find space for these connections. The present earthing switch has a connector specifically configured to connect to a HV cable, providing for easy adaptation to existing switchgear.

In an example, at least part of the outer surface of the connector has an outer cone shape that tapers away from the housing.

The connector having a cone shape facilitates connection of MV cable with the earthing switch, with the outer layer of the MV cable being presented outside the connector.

In an example, the connector is connected directly to the housing.

In an example, the connector is shaped into the insulating shell of the housing.

In an example, the earth switch comprises an outer layer that extends over at least part of an outer surface of the housing. The outer layer is at least partially conductive.
In an example, the outer layer is configured to electrically connect to Earth potential.

In this way, an earthed layer is provided around the earthing switch.

The practical advantage is that there are now more options where a earthing switching device can be placed, it can be placed both inside and outside switchgear compartments, and can easily be connected with a standard MV cable.

In this manner, an earthing switch is provided in a shape that is suitable for easy adaptation to existing switchgear, through having a special cable connector and a reliable earthed layer that can extend around the entire device.

In an example, the outer layer is configured to electrically connect to an earthing layer of the MV cable.

In this way, an earthed outer layer of the earth switch that connects to an earthed layer of the MV cable being connected to the earthing switch means that the earthing switch will have no live parts at its outside.

In an example, the outer layer is formed by painting.

In an example, the outer layer is formed by metal layer spraying.

In this way, a very solid and reliable earthing layer can be achieved, with good adhesion to thermoplastic, bulk moulding compound, and duroplastic materials.

In an example, the outer layer comprises a plastic material, wherein at least part of the plastic material comprises a conductive component.

In an example, the plastic material has an inner layer and an outer layer, and wherein the outer layer of the plastic material has the conductive material added to the plastic material.

In an example, the earthing switch is configured such that a motion of the movable contact changes the mode of operation from the first mode to the second mode.

In an example, the motion is a linear motion.

In an example, the motion is a rotational motion.

In a second aspect, there is provided a method of providing an earthing switch, comprising:
a) forming an insulating shell of a housing of an earthing switch;
c) connecting a Medium Voltage MV cable to a connector of the earthing switch;
d) extending an electrical connection that is connected to a core of the MV cable at least partially through the connector;
e) extending an outer layer of the MV cable at least partially over the connector;
g) extending an earthed terminal through the housing, wherein a part of the earthed terminal that is external to the insulating shell is electrically connect to Earth potential, wherein a movable contact that is inside the earthing switch is electrically connected to the earthed terminal; and wherein the method of providing an earthing switch comprises two modes of operation:
in a first mode of operation the electrical connection to the core of the MV cable that extends at least partially through the connector is not connected to the movable contact internal to the insulating shell to insulate the core of the MV cable from Earth potential; and
in a second mode of operation the electrical connection to the core of the MV cable that extends at least partially through the connector is connected to the movable contact internal to the insulating shell to electrically connect the core of the MV cable to Earth potential.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of an earthing switch;
Fig. 2 shows a method of providing an earthing switch;
Fig. 3 shows a detailed structure of an example of an earthing switch; and
Fig. 4 shows a detailed structure of the example of an earthing switch as shown in Fig. 3 that is connected to a MV cable.

### DETAILED DESCRIPTION OF EMBODIMENTS

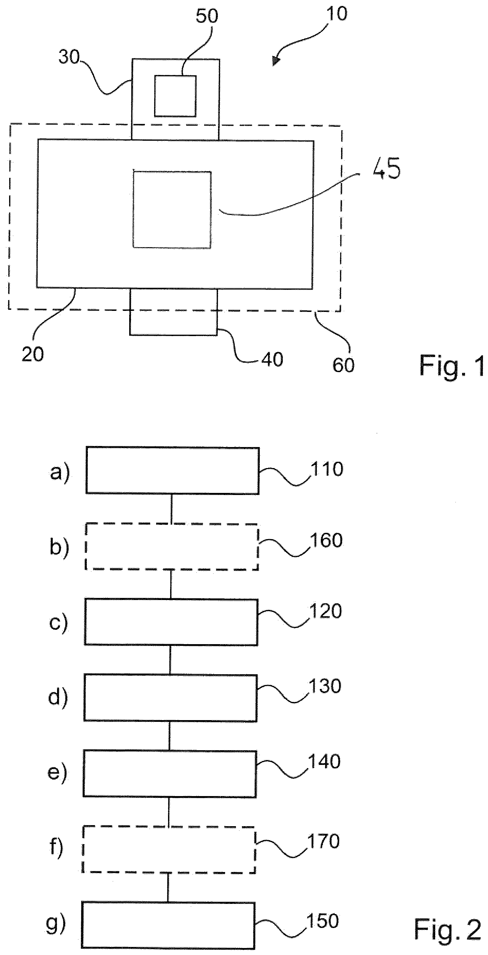

Fig. 1 shows an example of an earthing switch 10, where optional features are shown in dashed form. The earthing switch 10 comprises a housing 20, a connector 30, a movable contact 45 and an earth terminal 40. The housing 20 is configured to form an insulating shell of the earthing switch 10. The connector 30 is configured to connect to a Medium Voltage MV cable 70. The connector 30 is configured also to enable an electrical connection 50 to a core 80 of the MV cable 70 to extend at least partially through the connector 30. The electrical connection 50 can be the core 80 of the MV cable itself or a separate conductor to which the core 80 of the MV cable 70 is connected. The connector 30 is configured also to enable an outer layer 90 of the MV cable 70 to extend at least partially over the connector 30. The earth terminal 40 extends through the housing 20, and a part of the earth terminal 40 that is external to the insulating shell is configured to electrically connect to Earth potential. When the MV cable 70 is connected to the earthing switch 10, the earthing switch 10 is configured to operate in two modes. In a first mode of operation the electrical connection 50 that extends at least partially through the connector 30 is not connected to a part of the earth terminal 40 internal to the insulating shell. This means that the earthing switch 10 is open and the core 50 of the MV cable 70 is insulated from Earth potential. In a second mode of operation the electrical connection 50 that extends at least partially through the connector 30 is connected to the part of the earth terminal 40 internal to the insulating shell. This means that the earthing switch is closed and the core 50 of the MV cable 70 is electrically connected to Earth potential. The position of the movable contact 45 inside the earthing switch defines the present mode of operation.

In an example, the electrical connection that extends at least partially through the connector is the core of the MV or HV cable.

In an example, the electrical connection that extends at least partially through the connector is a metal contact that itself connects to the core of the MV or HV cable.

In an example, the earth terminal 40 is configured to connect to an earth bar 65.

In an example, the housing is formed from a thermoplastic.

In an example, the housing is formed from a bulk moulding compound (BMC).

In an example, the housing is formed from a duroplastic.

In an example, the connector 30 is formed from a thermoplastic.

In an example, the connector 30 is formed from a bulk moulding compound (BMC).

In an example, the connector 30 is formed from a duroplastic.

In an example, the earthing switch is an ultra fast earthing switch (UFES).
According to an example, at least part of the outer surface of the connector has an outer cone shape that tapers away from the housing.

According to an example, the connector is connected directly to the housing.

According to an example, the connector is shaped into the insulating shell of the housing.

According to an example, the earthing switch has an outer layer 60. This outer layer 60 extends over at least part of an outer surface of the housing, and the outer layer is at least partially conductive.

According to an example, the outer layer is configured to electrically connect to Earth potential.

According to an example, the outer layer is configured to electrically connect to an earthing layer of the MV cable.

According to an example, the outer layer is formed by painting.

According to an example, the outer layer is formed by metal layer spraying.

According to an example, the outer layer comprises a plastic material. At least part of the plastic material comprises a conductive component.

According to an example, the plastic material has an inner layer and an outer layer. The outer layer of the plastic material has the conductive material added to the plastic material.

According to an example, the earthing switch is configured such that a motion of the movable contact 45 changes the mode of operation from the first mode to the second mode.

According to an example, the motion is a linear motion.

According to an example, the motion is a rotational motion.

Fig. 2 shows a method 100 of providing an earthing switch in its basic steps, where dashed boxes represent optional steps.

The method 100 comprises: in a forming step 110, also referred to as step a), forming an insulating shell of a housing 20 of an earthing switch 10; in a connecting step 120, also referred to as step c), connecting a Medium Voltage MV cable 70 to a connector 30 of the earthing switch; in an extending step 130, also referred to as step d), extending an electrical connection 50 that is connected to a core 50, 80 of the MV cable at least partially through the connector; in an extending step 140, also referred to as step e), extending an outer layer 90 of the MV cable at least partially over the connector; in an extending step 150, also referred to as step g), extending an earthed terminal 40 through the housing, wherein a part of the earthed terminal that is external to the insulating shell is electrically connect to Earth potential, wherein a movable contact that is inside the earthing switch is electrically connected to the earthed terminal; and wherein the method of providing an earthing switch comprises two modes of operation: in a first mode of operation the electrical connection to the core of the MV cable that extends at least partially through the connector is not connected to a part of the earth terminal internal to the insulating shell to insulate the core of the MV cable from Earth potential; and in a second mode of operation the electrical connection to the core of the MV cable that extends at least partially through the connector is connected to the part of the earth terminal internal to the insulating shell to electrically connect the core of the MV cable to Earth potential.

In an example, the electrical connection that extends at least partially through the connector is the core of the MV or HV cable.

In an example, at least part of the outer surface of the connector has an outer cone shape that tapers away from the housing.

In an example, the connector is connected directly to the housing.

In an example, the connector is shaped into the insulating shell of the housing.

In an example, the method comprises step b), extending 160 an outer layer 60 over at least part of an outer surface of the housing, wherein the outer layer is at least partially conductive.

In an example, step b) comprises connecting the outer layer to Earth potential.

In an example, wherein the outer layer 90 of the cable comprises an earthing layer 92, and wherein the method comprises step f), electrically connecting 170 the outer layer 60 extending over at least part of the outer surface of the housing to the earthing layer 92 of the MV cable.

In an example, step b) comprises forming the outer layer by painting.

In an example, step b) comprises forming the outer layer by metal layer spraying.

In an example, the outer layer comprises a plastic material, wherein at least part of the plastic material comprises a conductive component.

In an example, the plastic material has an inner layer and an outer layer, and wherein the outer layer of the plastic material has the conductive material added to the plastic material.

In an example, changing the mode of operation from the first mode to the second mode comprises a motion of a movable contact.

In an example, the motion is a linear motion.

In an example, the motion is a rotational motion.

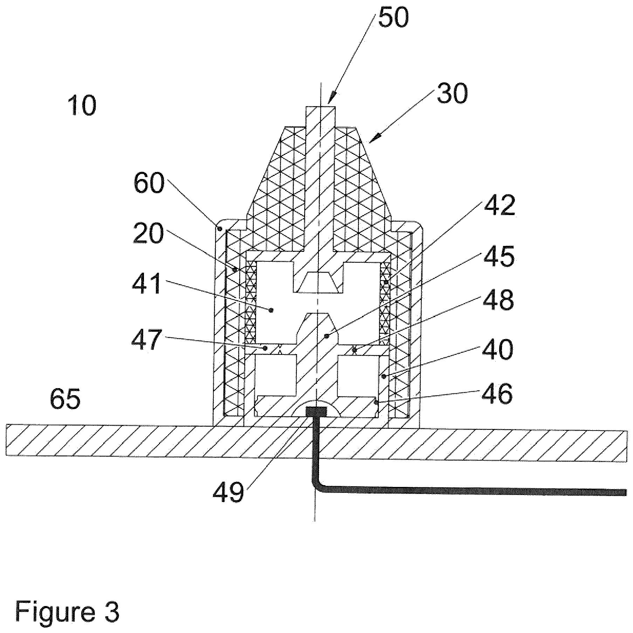

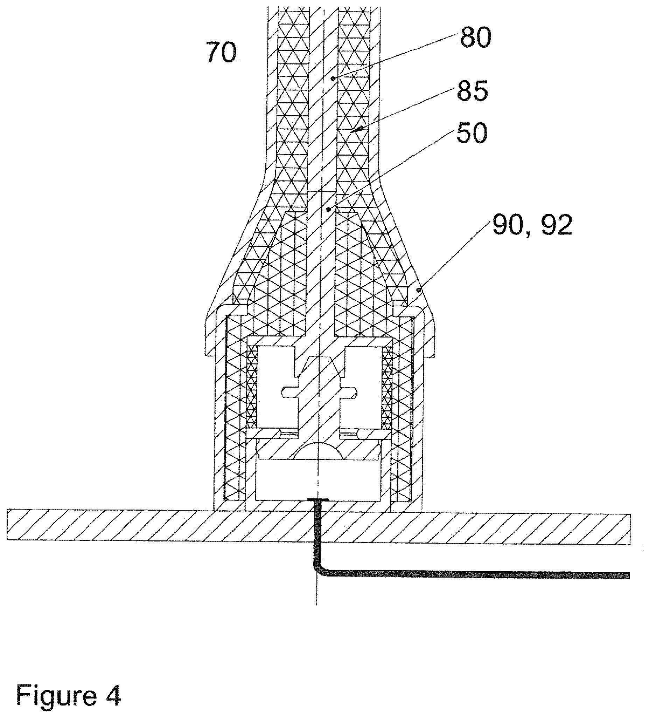

Fig. 3 shows a schematic of a detailed example of an earthing switch 10, with Fig. 4 showing the earthing switch having been connected to a MV cable 70. The earthing switch 10 is connected to an earth bar 65. A housing 20 of the earthing switch 10 is formed at the end further from the connection to the earth bar 65 into a connector having an outer cone shape 30. An electrical contact 50 extends through the connector 30, and this electrical contact 50 can be the core 80 of the MV cable 70. An earthing outer layer 60 extends around the outside of the housing 20. An earthterminal 40 extends though the bottom of the housing and is electrically connected to the earth bar. Figure 3 shows the movable contact 45 in its lower position, corresponding to the first mode of operation of the earthing switch 10, where the electrical contact 50 is insulated from earth potential. Said insulation is realised by a vacuum gap 41. Said vacuum gap is laterally limited by an insulating ring 42, that can e.g. be made of ceramics. Said vacuum gap is vertically limited by a gastight soldering of the insulating ring 42 to an extension of the electrical contact 50 and by a gastight soldering of the insulating ring 42 to a lower lid 47.

Figure 4 shows the movable contact 45 in its upper position, corresponding to the second mode of operation of the earthing switch 10, where the electrical contact 50 is connected to earth potential. The transition from the first to the second mode of operation is triggered by the ignition of a micro gas generator 49. The expanding gases will accelerate and move the movable contact upwards. Due to this motion, the predetermined breaking ring 48 in the lower lid 47 will break. The vacuum is the lost, but this can be accepted as the earthing switch is not supposed to insulate any more. The movable contact 45 is then landing with high speed at the lower end of the electrical contact 50. Due to the conical shape of the contacts and due to the high impact speed, the impact will lock both contacts 45, 50 to ensure a safe electrical connection for withstanding the short circuit current.

The movable contact 45 provides e.g. a sliding contact 46 or a spiral contact to establisch the electrical connection of the movable contact to the earth terminal 40 during the entire motion.

The MV cable 70 in addition to having a conductive core has an insulating layer 85 and an outer layer 90 that also has an earthing layer 92. The MV cable 70 is connected to the earthing switch with its core 80 extending through the connector 30 (or its core 80 is connected to a separate contact 50 that itself extends through the connector 30). At the same time, the outer layer 90 of the MV cable 70 goes around the outside of the cone shaped connector 30. The earthing layer 92 of the MV cable 70 then is in electrical connection with the earthing outer layer 60.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An earthing switch (10), comprising:
- a housing (20);
- a connector (30);
- a movable contact (45);
- an earth terminal (40);
• wherein, the housing is configured to form an insulating shell of the earthing switch;
• wherein, the connector is configured to connect to a Medium Voltage MV cable;
• wherein, the connector is configured to enable an electrical connection (50) to a core of the MV cable to extend at least partially through the connector;
• wherein, the connector is configured to enable an outer layer of the MV cable to extend at least partially over the connector;
• wherein, the earth terminal extends through the housing, wherein the movable contact (45) is electrically connected to the earth terminal; and wherein a part of the earth terminal that is external to the insulating shell is configured to electrically connect to Earth potential; and
• wherein, when the MV cable is connected to the earthing switch, the earthing switch is configured such that in a first mode of operation the electrical connection to the core of the MV cable that extends at least partially through the connector is not connected to a part of he earth terminal internal to the insulating shell to insulate the core of the MV cable from Earth potential, and in a second mode of operation the electrical connection to the core of the MV cable that extends at least partially through the connector is connected to the part of the earth terminal internal to the insulating shell to electrically connect the core of the MV cable to Earth potential

2. Earthing switch according to claim 1,
wherein at least part of the outer surface of the connector has an outer cone shape that tapers away from the housing.

3. Earthing switch according to any of claims 1-2,
wherein the connector is connected directly to the housing.

4. Earthing switch according to claim 3,
wherein the connector is shaped into the insulating shell of the housing.

5. Earthing switch according to any of claims 1-3,
comprising an outer layer (60) that extends over at least part of an outer surface of the housing, and wherein the outer layer is at least partially conductive.

6. Earthing switch according to claim 5,
wherein the outer layer is configured to electrically connect to Earth potential.

7. Earthing switch according to any of claims 5-6,
wherein the outer layer is configured to electrically connect to an earthing layer of the MV cable.

8. Earthing switch according to any of claims 5-7,
wherein the outer layer is formed by painting.

9. Earthing switch according to any of claims 5-8,
wherein the outer layer is formed by metal layer spraying.

10. Earthing switch according to any of claims 5-7,
wherein the outer layer comprises a plastic material, wherein at least part of the plastic material comprises a conductive component.

11. Earthing switch according to claim 10,
wherein the plastic material has an inner layer and an outer layer, and wherein the outer layer of the plastic material has the conductive material added to the plastic material.

12. Earthing switch according to any of claims 1-11,
wherein the earthing switch is configured such that a motion changes the mode of operation from the first mode to the second mode.

13. Earthing switch according to claim 12,
wherein the motion is a linear motion.

14. Earthing switch according to any of claims 12-13,
wherein the motion is a rotational motion.

15. A method (100) of providing an earthing switch, comprising:
a) forming (110) an insulating shell of a housing (20) of an earthing switch (10);
c) connecting (120) a Medium Voltage MV cable (70) to a connector (30) of the earthing switch;
d) extending (130) an electrical connection (50) that is connected to a core (50, 80) of the MV cable at least partially through the connector;
e) extending (140) an outer layer (90) of the MV cable at least partially over the connector;
g) extending (150) an earthed terminal (40) through the housing,wherein a part of the earthed terminal that is external to the insulating shell is electrically connect to Earth potential; and
wherein a movable contact (45) that is inside the earthing switch is electrically connected to the earthed terminal, and wherein the method of providing an earthing switch comprises two modes of operation:
• in a first mode of operation the electrical connection to the core of the MV cable that extends at least partially through the connector is not connected to the movable contact internal to the insulating shell to insulate the core of the MV cable from Earth potential; and
• in a second mode of operation the electrical connection to the core of the MV cable that extends at least partially through the connector is connected to the movable contact internal to the insulating shell to electrically connect the core of the MV cable to Earth potential.
